Europäisches Patentamt

European Patent Office

Office européen des brevets

(19)

(11) EP 0 572 647 B1

(12) FASCICULE DE BREVET EUROPEEN

(45) Date de publication et mention
de la délivrance du brevet:
**09.10.1996 Bulletin 1996/41**

(21) Numéro de dépôt: **93902347.9**

(22) Date de dépôt: **17.12.1992**

(51) Int Cl.[6]: **C08F 10/00**, C08F 4/68

(86) Numéro de dépôt international:
**PCT/FR92/01204**

(87) Numéro de publication internationale:
**WO 93/12149 (24.06.1993 Gazette 1993/15)**

(54) **CATALYSEUR POUR LA (CO)POLYMERISATION DES ALPHA-OLEFINES, UN PROCEDE POUR SA PREPARATION ET PROCEDE DE (CO)POLYMERISATION LE METTANT EN UVRE**

KATALYSATOR FÜR ALPHA-OLEFIN(CO)POLYMERISATION, VERFAHREN ZU SEINER HERSTELLUNG UND (CO)POLYMERISATIONSVERFAHREN ZU SEINER VERWENDUNG

METHOD AND CATALYST FOR THE (CO)POLYMERIZATION OF ALPHA-OLEFINS, METHOD FOR THE PREPARATION OF SUCH CATALYST

(84) Etats contractants désignés:
**AT BE CH DE DK ES FR GB GR IE IT LI LU NL PT SE**

(30) Priorité: **19.12.1991 FR 9115818**

(43) Date de publication de la demande:
**08.12.1993 Bulletin 1993/49**

(73) Titulaire: **ECP ENICHEM POLYMERES FRANCE F-92411 Courbevoie (FR)**

(72) Inventeurs:
• **ADISSON, Emmanuel**
**F-62460 Divion (FR)**
• **BUJADOUX, Karel**
**F-62300 Lens (FR)**
• **FONTANILLE, Michel**
**F-33400 Talence (FR)**
• **DEFFIEUX, Alain**
**F-33200 Bordeaux-Cauderan (FR)**

(74) Mandataire: **Chaillot, Geneviève**
**Cabinet CHAILLOT,**
**B.P. No. 74**
**92703 Colombes Cédex (FR)**

(56) Documents cités:
**EP-A- 0 133 783          FR-A- 2 090 646**

## Description

La présente invention concerne un catalyseur pour l'homopolymérisation des alpha-oléfines, notamment de l'éthylène, et la copolymérisation des alpha-oléfines entre elles, notamment de l'éthylène avec au moins une alpha-oléfine comprenant de 3 à 12 atomes de carbone, un système catalytique comprenant ledit catalyseur, un procédé pour la préparation du catalyseur et un procédé de (co)polymérisation mettant en oeuvre ledit catalyseur.

Depuis de nombreuses années, il est connu d'utiliser les catalyseurs de type ZIEGLER-NATTA, comprenant au moins un composé de métal de transition, en association avec un activateur, généralement un composé organoaluminique, pour (co)polymériser les alpha-oléfines dans des conditions variées de température et de pression. Les composés de métal de transition les plus fréquemment utilisés sont des composés de titane.

Il est par ailleurs connu que les composés de vanadium, utilisés en tant que seuls composés de métal de transition, voient, lors de la (co)polymérisation de l'éthylène, leur activité diminuer très rapidement et, corollairement, conduisent à des rendements peu élevés en (co)polymères.

Il est également connu par le document FR-A-2 090 646 d'activer les systèmes catalytiques comprenant un composé de vanadium et un composé organoaluminique, au moyen de tétrachlorure de carbone. Le composé de vanadium est, selon ce document, obtenu en traitant par un alcool un produit de réaction d'un composé de vanadium avec l'acide phosphorique ou un de ses dérivés. Il est aussi connu que les catalyseurs de type ZIEGLER-NATTA peuvent avoir une activité améliorée s'ils sont dispersés sur un support minéral comme le chlorure ou l'oxyde de magnésium ou la silice. De nombreux documents rapportent des tentatives effectuées dans ce sens. Les systèmes catalytiques au vanadium sont maintenant très complexes puisqu'ils peuvent comprendre des donneurs d'électrons pour les rendre solubles, des activateurs et des supports.

Dans le but de pouvoir utiliser des composés de vanadium, sans autre composé de métal de transition, la demanderesse a poursuivi des recherches visant simultanément à simplifier les catalyseurs antérieurement connus, à augmenter leur activité de (co)polymérisation, à trouver des catalyseurs utilisables notamment dans un procédé de (co)polymérisation sous haute pression (>400 bars) et à haute température (≥150°C) ; dans ces conditions particulières de (co)polymérisation, il est nécessaire que l'activité des catalyseurs soit élevée, donc que ceux-ci conduisent à des rendements élevés en (co)polymères car il n'est pas techniquement envisageable de débarrasser les (co)polymères obtenus des résidus catalytiques qu'ils contiennent. La demanderesse a trouvé maintenant un catalyseur simple, qui répond à ces besoins et qui est aisé à préparer.

Un premier objet de la présente invention consiste en un catalyseur pour l'homopolymérisation et la copolymérisation des alpha-oléfines, comprenant un composé de vanadium activé au moyen d'un composé organohalogéné, caractérisé en ce qu'il a pour formule générale :

$$VX_3, mAlX_3, nZ$$

dans laquelle :

- X est un atome d'halogène ;
- Z est au moins un hydrocarbure saturé, ramifié ou non, au moins partiellement halogéné ;
- m est compris entre 0,1 et 10 ; et
- n est compris entre 1 et 300.

De préférence, l'atome d'halogène X est le chlore ou le brome, avantageusement le chlore. La valeur de m est avantageusement comprise entre 0,2 et 3, de préférence voisine de ou égale à 0,33.

L'hydrocarbure halogéné Z appartient à la série aliphatique ou cycloaliphatique et comprend au moins un atome de carbone dans sa molécule, et au moins un atome d'halogène choisi avantageusement parmi le fluor, le chlore et le brome, de préférence le chlore. Il peut comporter des atomes d'halogène différents. Le nombre de carbones de Z n'est pas critique, mais, de préférence, il est inférieur à 10.

Des exemples de tels hydrocarbures halogénés sont le chlorométhane, le dichlorométhane, le bromochlorométhane, le dibromométhane, le trichlorométhane (chloroforme), le tribromométhane (bromoforme), le tétrachlorure de carbone, le bromotrichlorométhane, le fluorotrichlorométhane, le tétrabromométhane, le 1,2-dichloroéthane, le 1,1,1-trichloroéthane, le 1,1,1-trichloro-2,2,2-trifluoroéthane, l'hexachloroéthane.

De préférence, n est compris entre 2 et 100, avantageusement entre 4 et 50.

La détermination de la composition du catalyseur selon l'invention peut être réalisée analytiquement au moyen:

- d'une distillation pour déterminer la teneur en hydrocarbure halogéné Z,
- d'une minéralisation au moyen d'un mélange $H_2SO_4/KHSO_4$ permettant d'obtenir une solution sur laquelle est déterminée la teneur en vanadium et aluminium par spectrométrie d'absorption atomique en flamme et la teneur en halogène par potentiométrie au nitrate d'argent.

Le catalyseur peut en outre être associé à au moins un hydrocarbure saturé, aliphatique ou cycloaliphatique, ramifié ou non, de préférence liquide dans les conditions normales de température et de pression, et comportant au moins 6 atomes de carbone. Il s'agit par exemple du cyclohexane, du méthylcyclohexane, de l'isododécane, de coupes d'hydrocarbures saturés en $C_{10}$-$C_{12}$. Le catalyseur selon l'invention se présente généralement, en présence ou en l'absence dudit hydrocarbure saturé, à l'état de suspension.

Le catalyseur selon l'invention est avantageusement constitué des composés décrits ci-dessus ($VX_3$, $AlX_3$, Z, le cas échéant hydrocarbure saturé) à l'exclusion de tout autre composé tel que donneur d'électrons, support minéral et complexant. Mais il nécessite, pour être actif en (co)polymérisation, d'être transformé en système catalytique au moyen d'un activateur.

Un autre objet de la présente invention consiste en un système catalytique pour l'homopolymérisation et la copolymérisation des alpha-oléfines, comprenant au moins un composé de métal de transition et au moins un activateur organométallique, caractérisé en ce que le composé de métal de transition est un catalyseur tel que décrit ci-dessus.

Ainsi, avant d'être utilisé en (co)polymérisation, de préférence juste avant, ou même in-situ, le catalyseur selon l'invention est transformé en système catalytique par action d'au moins un activateur organométallique (composé d'un métal des Groupes I à III de la Classification Périodique), généralement à température ambiante sous agitation.

La nature et la quantité de l'activateur sont choisies en fonction des performances souhaitées (activateur plus ou moins réducteur, système catalytique possédant une grande activité initiale ou bien conduisant à un polymère d'indice de fluidité spécifique. La quantité d'activateur est néanmoins généralement comprise entre 1 et 100 fois la quantité molaire d'halogénure de vanadium.

L'activateur est avantageusement choisi parmi les trialkylaluminiums $AlR_3$, les halogénodialkylaluminiums comme $Al(C_2H_5)_2Cl$, les dihalogénoalkylaluminiums comme $AlC_2H_5Cl_2$, les sesquihalogénures d'alkylaluminium, les tétralkylaluminoxanes RR'Al-O-AlR''R''', les monoalkylsilanolatodialkylaluminiums $RH_2Si$-O-AlR'R'', les dialkylsilanolatodialkylaluminiums RHR'Si-O-AlR''R''', les pentalkylsiloxalanes RR'R''Si-O-AlR'''R'''' tel le diméthyléthyldiéthylsiloxalane, les alcoxydialkylaluminiums R-O-AlR'R'' tel l'éthoxydiéthylaluminium, les dialcoxyalkylaluminiums RO(R'O)AlR'', et leurs mélanges, les radicaux alkyles R, R', R'', R''' et R'''', identiques ou différents, ayant de 1 à 12 atomes de carbone.

On choisit de préférence, un trialkylaluminium de formule $R_3Al$, dans laquelle R est un radical alkyle substitué ou non, comportant de 1 à 10 atomes de carbone, choisi avantageusement parmi les radicaux éthyle, isobutyle, n-hexyle et n-octyle.

L'activateur organométallique est utilisé en une quantité telle que le rapport du métal qu'il contient (généralement l'aluminium) au vanadium du catalyseur est compris entre 1 et 100, de préférence entre 2 et 50, avantageusement entre 4 et 20.

Le catalyseur selon l'invention, associé à un activateur adéquat, permet d'obtenir un homopolymère de l'éthylène possédant un faible indice de polydispersité (rapport de la masse molaire moyenne en masse à la masse molaire moyenne en nombre déterminées par chromatographie par perméation de gel), avec un rendement élevé. Il permet, lors de la copolymérisation de l'éthylène avec au moins une alpha-oléfine d'obtenir, également avec des rendements élevés, des copolymères possédant une teneur plus élevée en comonomère, pour un même rapport alpha-oléfine/éthylène entrant en copolymérisation et une répartition plus homogène des motifs de comonomère, et une distribution généralement étroite et unimodale des masses molaires.

Un autre objet de la présente invention consiste en un procédé de préparation d'un catalyseur ci-dessus défini, comprenant une première étape de cobroyage d'un halogénure de vanadium choisi parmi les composés de formules $VX_2$ et $VX_3$ et leurs mélanges, formules dans lesquelles X est un atome d'halogène, avantageusement le chlore ou le brome, avec un halogénure d'aluminium $AlX_3$, et une seconde étape consistant à ajouter au moins un hydrocarbure halogéné Z tel que défini ci-dessus, au mélange obtenu lors de la première étape, le rapport molaire de l'halogénure d'aluminium au composé de vanadium étant compris entre 0,1 et 10, le rapport molaire du ou des hydrocarbures halogénés Z au composé de vanadium étant compris entre 1 et 300.

Le cobroyage de l'halogénure de vanadium et de l'halogénure d'aluminium est avantageusement réalisé pendant un temps suffisant au moyen d'un broyeur, pouvant fournir une énergie de broyage telle que le mélange d'halogénure de vanadium et d'halogénure d'aluminium se présente sous la forme d'une solution solide, identifiable au moyen de son spectre de rayons X.

Le ou les hydrocarbures halogénés peuvent être ajoutés au moment du cobroyage ou bien après. Il est préférable, dans le cas de l'utilisation de $VCl_2$, de mettre en oeuvre le cobroyage en présence du ou des hydrocarbures halogénés.

On remarque que le catalyseur selon l'invention peut être obtenu en utilisant un dihalogénure de vanadium $VX_2$, notamment $VCl_2$, comme composé de vanadium initial. Il a en effet été constaté que, en présence du ou des hydrocarbures halogénés Z, et après un temps de contact suffisant, généralement de quelques heures à quelques jours, en fonction inverse de la température, le composé $VX_2$ était oxydé en $VX_3$ (alors que le composé $VX_3$ n'est pas trans-

formé en $VX_4$).

Lors de l'utilisation de $VX_3$ comme composé de vanadium initial, les quantités de $VX_3$, $AlX_3$ et Z respectives, correspondent à celles indiquées lors de la description du catalyseur.

Lors de l'utilisation de $VX_2$ comme composé de vanadium initial, la quantité d'hydrocarbure(s) halogéné(s) Z à utiliser lors de la préparation doit être telle que le rapport atomique des atomes d'halogène qu'elle contient au vanadium soit au moins égal à 3, avantageusement supérieur ou égal à 10. De préférence, on utilise un hydrocarbure halogéné Z possédant au moins 3 atomes d'halogène dans sa molécule.

Le procédé de préparation du catalyseur selon l'invention est mis en oeuvre à une température pouvant être comprise entre environ 0 et 80°C, avantageusement voisine de la température ambiante.

Le procédé de préparation du catalyseur peut en outre être mis en oeuvre en présence d'un hydrocarbure saturé, aliphatique ou cycloaliphatique, ramifié ou non, tel que défini ci-dessus, l'ajout dudit hydrocarbure saturé ayant lieu pendant le cobroyage, après le cobroyage, ou après addition du ou des hydrocarbures halogénés, ou au cours de chacune de ces étapes.

Un autre objet de la présente invention consiste en un procédé de (co)polymérisation des alpha-oléfines, à une température comprise entre 20° et 350°C environ, en présence d'au moins un catalyseur tel que décrit ci-dessus et d'au moins un activateur, donc en présence d'un système catalytique tel que décrit ci-dessus. Les oléfines pouvant être polymérisées selon ce procédé incluent notamment l'éthylène et les $\alpha$-oléfines ayant de 3 à 6 atomes de carbone telles que le propylène, le butène-1 et le méthyl-4 pentène-l. L'éthylène peut également être copolymérisé avec des $\alpha$-oléfines ayant de 3 à 12 atomes de carbone, telles que, outre celles qui viennent d'être citées, l'hexène-1, l'octène-1.

La polymérisation ou la copolymérisation peut être mise en oeuvre selon un processus continu ou discontinu, dans un réacteur autoclave ou tubulaire.

Le procédé de polymérisation peut être mis en oeuvre à une température comprise entre 20 et 250°C, sous une pression allant jusqu'à 200 bars environ, en solution ou en suspension dans un hydrocarbure inerte ayant au moins 6 atomes de carbone tel qu'une coupe d'hydrocarbures aliphatiques saturés en $C_{10}$-$C_{12}$.

Dans le cas de la (co)polymérisation de l'éthylène, il peut aussi être mis en oeuvre, de façon continue, dans un réacteur dans lequel le temps de séjour moyen du catalyseur est compris entre 1 et 150 secondes environ, la polymérisation étant effectuée à une température comprise entre 160 et 350°C environ, sous une pression comprise entre 400 et 3000 bars environ.

De façon à moduler la masse molaire du (co)polymère obtenu et son indice de fluidité, on peut opérer en présence de jusqu'à 2 % en moles d'un agent de transfert de chaîne, tel que l'hydrogène. Le procédé de polymérisation selon l'invention permet l'obtention de toute une gamme de (co)polymères de l'éthylène de densité comprise entre 0,86 et 0,97, selon le rapport entre l'éthylène et le(s) comonomère(s) constituant le flux gazeux soumis à polymérisation.

Les exemples ci-après ont pour but d'illustrer l'invention de façon non limitative.

## Exemples 1 à 19 - Préparation du catalyseur

Dans un broyeur discontinu à billes, on a introduit d'une part du trichlorure de vanadium $VCl_3$ et d'autre part du trichlorure d'aluminium $AlCl_3$ selon un rapport molaire Al/V = 1/3. Après sept heures de cobroyage, la solution solide obtenue $VCl_3$, $1/3AlCl_3$ a été mise en suspension dans un hydrocarbure halogéné Z dont la nature figure au Tableau I, selon un rapport molaire Z/V indiqué également au Tableau I.

## Tableau I

| Exemple | Z | Z/V |
|---------|-----|-----|
| 1 | $CCl_4$ | 4 |
| 2 | $CCl_4$ | 10 |
| 3 | $CCl_4$ | 20 |
| 4 | $CCl_4$ | 30 |
| 5 | $CCl_4$ | 50 |
| 6 | $CCl_4$ | 100 |
| 7 | $CCl_4$ | 250 |
| 8 | $CH_3-CCl_3$ | 10 |
| 9 | $CH_3-CCl_3$ | 30 |
| 10 | $CH_3-CCl_3$ | 100 |
| 11 | $CHCl_3$ | 30 |
| 12 | $CHBr_3$ | 30 |
| 13 * | $CCl_3-CCl_3$ | 30 |
| 14 | $CH_2Cl_2$ | 30 |
| 15 | $CH_2BrCl$ | 30 |
| 16 | $CH_2Br_2$ | 30 |
| 17 | $CF_3CCl_3$ | 30 |
| 18 | $CBrCl_3$ | 30 |
| 19 * | $CBr_4$ | 30 |

\*    Dans le cas des Ex. 13 et 19, la solution solide obtenue a d'abord été mise en suspension dans une quantité

d'isododécane suffisante pour obtenir une suspension manipulable.

Exemples 20 à 46 - Homopolymérisation de l'éthylène

Dans un réacteur autoclave d'une capacité de 1 litre, muni de moyens d'agitation et de régulation de température, on a introduit 500 ml d'isododécane et purgé à l'azote en élevant la température jusqu'à 160°C. On a introduit alors l'éthylène jusqu'à une pression de 4 bars relatifs puis le système catalytique préparé dans le sas d'injection de l'autoclave en y introduisant successivement l'activateur organoaluminique et la suspension de catalyseur. La pression de 4 bars a été maintenue pendant 1 minute par apport d'éthylène, et la température de 160°C a été également maintenue constante.

Le contenu du réacteur a alors été déchargé et le polymère séparé, lavé, séché et pesé. La quantité obtenue Q est exprimée au Tableau II ci-après en kg de polyéthylène par gramme de vanadium par minute.

On a également fait figurer au Tableau II le catalyseur utilisé, repéré par le numéro de son exemple de préparation, la quantité de catalyseur utilisée exprimée en millimoles de vanadium, la nature de l'activateur organoaluminique A et la quantité utilisée exprimée par le rapport molaire Al/V.

5

Le catalyseur selon l'invention est pratiquement non-dimérisant, la teneur en groupes méthyle dans l'homopolymère d'éthylène obtenu étant, quel que soit l'exemple, au maximum de 3 pour 1000 atomes de carbone.

Tableau II

| Exemple | Catalyseur | | A | | Polyéthylène |
|---|---|---|---|---|---|
| | Selon Exemple | Quantité mmole V | Nature * | Al/v | Q |
| 20 | 1 | 0,01 | THA | 10 | 10,6 |
| 21 | 2 | 0,01 | THA | 10 | 12 |
| 22 | 3 | 0,01 | THA | 10 | 14,2 |
| 23 | 4 | 0,01 | THA | 10 | 15,1 |
| 24 | 5 | 0,01 | THA | 10 | 13,6 |
| 25 | 6 | 0,01 | THA | 10 | 11,8 |
| 26 | 7 | 0,01 | THA | 10 | 7,1 |
| 27 | 4 | 0,008 | TEA | 10 | 15,3 |
| 28 | 4 | 0,005 | TEA | 10 | 14,8 |
| 29 | 8 | 0,005 | TEA | 10 | 11,8 |
| 30 | 8 | 0,004 | THA | 10 | 13,7 |
| 21 | 9 | 0,005 | TEA | 10 | 17,5 |
| 32 | 10 | 0,005 | TEA | 10 | 18,3 |
| 33 | 10 | 0,005 | TEA | 30 | 17,9 |
| 34 | 10 | 0,005 | TEA | 100 | 18,5 |
| 35 | 10 | 0,004 | THA | 10 | 18,3 |
| 36 | 10 | 0,004 | THA | 30 | 18,9 |
| 37 | 10 | 0,004 | THA | 100 | 18,9 |
| 38 | 11 | 0,005 | TEA | 10 | 11,7 |
| 39 | 12 | 0,005 | TEA | 10 | 11,7 |
| 40 | 13 | 0,005 | TEA | 10 | 12,1 |
| 41 | 14 | 0,01 | TEA | 10 | 4,6 |
| 42 | 15 | 0,01 | TEA | 10 | 5,2 |
| 43 | 16 | 0,01 | TEA | 10 | 5,6 |
| 44 | 17 | 0,005 | TEA | 10 | 6,2 |
| 45 | 18 | 0,005 | TEA | 10 | 7,2 |
| 46 | 19 | 0,005 | TEA | 10 | 5,8 |

\* THA : tri-n-hexylaluminium
TEA : triéthylaluminium

A titre comparatif, on a réalisé des essais d'homopolymérisation de l'éthylène dans les mêmes conditions de température, pression, durée qu'aux Exemples 20 à 46 mais en utilisant des catalyseurs ne répondant pas à la description ci-dessus des catalyseurs selon l'invention (absence d'$AlCl_3$, ou de l'hydrocarbure halogéné Z, ou des deux). Les données et résultats de ces exemples comparatifs sont rassemblés dans le Tableau III.

Tableau III

| Exemple Comparatif | Catalyseur | | Hydro carbure halogéné Z | | Activateur | | Q Poly éthylène kg/g de V/ min. |
|---|---|---|---|---|---|---|---|
| | Nature | Quantité (mmoles V) | Nature | Z/V molaire | Nature | Al/V molaire | |
| C I | $VCl_3$ | 0,1 | - | - | THA* | 10 | 0,85 |
| C II | $VCl_3$ | 0,1 | - | - | TEA** | 10 | 0,8 |

\* THA : tri-n-hexylaluminium

\*\* TEA : triéthylaluminium

Tableau III   (suite)

| Exemple Comparatif | Catalyseur | | Hydro carbure halogéné Z | | Activateur | | Q Poly éthylène kg/g de V/ min. |
|---|---|---|---|---|---|---|---|
| | Nature | Quantité (mmoles V) | Nature | Z/V molaire | Nature | Al/V molaire | |
| C III | $VCl_3$ | 0,01 | $CCl_4$ | 30 | TEA | 10 | 4,6 |
| C IV | $VCl_3$ | 0,01 | $CH_2Cl_2$ | 30 | TEA | 10 | 2 |
| C V | $VCl_3$ | 0,01 | $CHCl_3$ | 30 | TEA | 10 | 2,5 |
| C VI | $VCl_3$, $1/3AlCl_3$ | 0,1 | - | - | TEA | 10 | 1,3 |
| C VII | $VCl_3$, $1/3AlCl_3$ | 0,05 | - | - | TEA | 10 | 1,4 |
| C VIII | $VCl_3$, $1/3AlCl_3$ | 0,1 | - | - | THA | 10 | 2 |
| C IX | $VCl_3$, $1/3AlCl_3$ | 0,01 | - | - | THA | 10 | 3,5 |
| C X | $VCl_3$, $1/3AlCl_3$ | 0,04 | - | - | TEA | 10 | 1,7 |
| C XI | $VCl_3$, $1/3AlCl_3$ | 0,04 | - | - | TEA | 20 | 1,5 |
| C XII | $VCl_3$, $1/3AlCl_3$ | 0,04 | - | - | TEA | 50 | 1,35 |
| C XIII | $VCl_3$, $1/3AlCl_3$ | 0,04 | - | - | TEA | 75 | 1,2 |
| C XIV | $VCl_3$, $1/3AlCl_3$ | 0,02 | - | - | THA | 10 | 3,7 |
| C XV | $VC_3$, $1/3AlCl_3$ | 0,02 | - | - | THA | 20 | 3,5 |
| C XVI | $VC_3$, $1/3AlCl_3$ | 0,02 | - | - | THA | 50 | 3,1 |

Exemples 47 à 59 - Copolymérisation de l'éthylène avec l'hexène-1

Dans un réacteur autoclave d'une capacité de 1 litre, muni de moyens d'agitation et de régulation de température, on a introduit 500 ml d'isododécane et purgé à l'azote en élevant la température jusqu'à 160°C. On a introduit alors l'hexène-I en une quantité q exprimée en ml au Tableau IV ci-après puis l'éthylène jusqu'à une pression de 4 bars relatifs puis le système catalytique préparé dans le sas d'injection de l'autoclave en y introduisant successivement l'activateur organoaluminique et la suspension de catalyseur. La pression de 4 bars a été maintenue pendant 1 minute par apport d'éthylène, et la température de 160°C a été également maintenue constante.

Le contenu du réacteur a alors été déchargé et le copolymère obtenu a été séparé, lavé, séché et pesé. On a fait figurer au Tableau IV, outre la quantité d'hexène-1 q, le catalyseur utilisé repéré par le numéro de son exemple de préparation, la quantité utilisée exprimée en millimoles de vanadium, la nature de l'activateur organoaluminique A et la quantité utilisée exprimée par le rapport molaire Al/V, et la quantité Q de copolymère formé exprimée en grammes par gramme de vanadium par minute ainsi que le taux SCB de branches courtes n-butyle du copolymère, déterminé par mesure du taux de groupes méthyle selon la norme ASTM D 2238, et exprimé en nombre de branches courtes pour 1000 carbones méthyléniques totaux.

Tableau IV

| Exemple | Hexène-1 q ml | Catalyseur | | A | | Copolymère | |
|---|---|---|---|---|---|---|---|
| | | Selon Exemple | Quantité mmole V | Nature * | Al/V | Q | SCB |
| 47 | 10 | 3 | 0,1 | THA | 10 | 1060 | 17,9 |
| 48 | 25 | 3 | 0,1 | THA | 10 | 870 | 27,5 |
| 49 | 35 | 3 | 0,1 | THA | 10 | 520 | 33,0 |
| 50 | 35 | 3 | 0,1 | TEA | 10 | 330 | 25,0 |
| 51 | 35 | 2 | 0,1 | THA | 10 | 270 | 32,5 |
| 52 | 35 | 5 | 0,1 | THA | 10 | 240 | 33,2 |
| 53 | 30 | 11 | 0,1 | TEA | 10 | 1385 | 25,0 |
| 54 | 30 | 11 | 0,05 | TEA | 10 | 1510 | 24,7 |
| 55 | 20 | 11 | 0,1 | TEA | 10 | 1380 | 20,4 |
| 56 | 20 | 11 | 0,05 | TEA | 10 | 1740 | 19,7 |
| 57 | 10 | 11 | 0,01 | TEA | 10 | 2010 | 11,3 |
| 58 | 50 | 11 | 0,05 | TEA | 10 | 720 | 35,5 |
| 59 | 30 | 9 | 0,025 | TEA | 10 | 1840 | 25,2 |

* THA : tri-n-hexylaluminium ** TEA : triéthylaluminium

A titre comparatif on a réalisé des essais de copolymérisation de l'éthylène avec l'hexène-1, dans les mêmes conditions de température, pression, durée qu'aux Exemples 47 à 59 mais en utilisant des catalyseurs ne répondant pas à la description ci-dessus des catalyseurs selon l'invention. Les données et résultats de ces exemples comparatifs sont rassemblés dans le Tableau V.

EP 0 572 647 B1

Tableau V

| Exemple Compa-ratif | Hexène-1 q ml | Catalyseur | | Hydrocarbure halogéné | | A | | Copolymère | |
|---|---|---|---|---|---|---|---|---|---|
| | | Nature | Quantité mmole V | Nature | Z/V molaire | Nature * | Al/V molaire | Q g/g de V/min. | SCB |
| C XVII | 10 | $VCl_3$ | 0,1 | - | - | THA | 10 | 430 | 10,8 |
| C XVIII | 30 | $VCl_3$ | 0,1 | - | - | TEA | 10 | 180 | 14,2 |
| C XIX | 50 | $VCl_3$ | 0,1 | - | - | THA | 10 | 130 | 18,2 |
| C XX | 30 | $VCl_3$ | 0,1 | $CHCl_3$ | 30 | TEA | 10 | 640 | 22,5 |
| C XXI | 30 | $VCl_3$ | 0,1 | $CCl_4$ | 50 | TEA | 10 | 180 | 19,8 |
| C XXII | 50 | $VCl_3$ | 0,1 | $CHCl_3$ | 30 | TEA | 10 | 550 | 30,0 |
| C XXIII | 10 | $VCl_3, 1/3AlCl_3$ | 0,1 | - | - | THA | 10 | 830 | 12,3 |
| C XXIV | 10 | $VCl_3, 1/3AlCl_3$ | 0,2 | - | - | TEA | 10 | 765 | 10,9 |
| C XXV | 30 | $VCl_3, 1/3AlCl_3$ | 0,15 | - | - | TEA | 10 | 340 | 24,7 |
| C XXVI | 50 | $VCl_3, 1/3AlCl_3$ | 0,2 | - | - | TEA | 10 | 145 | 35,0 |
| C XXVII | 30 | $VCl_3, 1/3AlCl_3$ | 0,15 | - | - | THA | 10 | 500 | 29,8 |
| C XXVIII | 50 | $VCl_3, 1/3AlCl_3$ | 0,2 | - | - | THA | 10 | 310 | 38,5 |

* THA : tri-n-hexylaluminium ;     TEA : triéthylaluminium

**Revendications**

1. Catalyseur pour l'homopolymérisation et la copolymérisation des alpha-oléfines, comprenant un composé de vanadium activé au moyen d'un composé organohalogéné, caractérisé en ce qu'il a pour formule générale :

$$VX_3, mAlX_3, nZ$$

dans laquelle :

- X est un atome d'halogène ;
- Z est au moins un hydrocarbure saturé, ramifié ou non, au moins partiellement halogéné ;
- m est compris entre 0,1 et 10 ; et
- n est compris entre 1 et 300.

2. Catalyseur selon la revendication 1, caractérisé en ce que X est le chlore.

3. Catalyseur selon l'une des revendications 1 et 2, caractérisé en ce que m est compris entre 0,2 et 3.

4. Catalyseur selon l'une des revendications 1 à 3, caractérisé en ce que n est compris entre 2 et 100, avantageusement entre 4 et 50.

5. Catalyseur selon l'une des revendications 1 à 4, caractérisé en ce qu'il est en outre associé à au moins un hydrocarbure saturé, aliphatique ou cycloaliphatique, ramifié ou non, de préférence liquide dans les conditions normales de température et de pression, et comportant au moins 6 atomes de carbone.

6. Système catalytique pour l'homopolymérisation et la copolymérisation des alpha-oléfines, comprenant au moins un composé de métal de transition et au moins un activateur organométallique, caractérisé en ce que le composé de métal de transition est un catalyseur conforme à l'une des revendications 1 à 5.

7. Système catalytique selon la revendication 6, caractérisé en ce que l'activateur organométallique est un trialkylaluminium de formule $R_3Al$, dans laquelle R est un radical alkyle substitué ou non comportant de 1 à 10 atomes de carbone.

8. Système catalytique selon l'une des revendications 6 et 7, caractérisé en ce que le rapport molaire du métal de l'activateur organométallique au vanadium est compris entre 1 et 100, de préférence entre 2 et 50.

9. Procédé de préparation d'un catalyseur conforme à l'une des revendications 1 à 5, caractérisé en ce qu'il comprend une première étape de cobroyage d'un halogénure de vanadium choisi parmi les composés de formules $VX_2$ et $VX_3$, et leurs mélanges, formules dans lesquelles X est un atome d'halogène, avec un halogénure d'aluminium $AlX_3$, et une seconde étape consistant à ajouter au moins un hydrocarbure halogéné Z, tel que défini à la revendication 1, au mélange obtenu lors de la première étape, le rapport molaire de l'halogénure d'aluminium au composé de vanadium étant compris entre 0,1 et 10, le rapport molaire du ou des hydrocarbures halogénés Z au composé de vanadium étant compris entre 1 et 300.

10. Procédé selon la revendication 9, caractérisé en ce qu'il est mis en oeuvre à une température comprise entre 0 et 80 °C.

11. Procédé selon l'une des revendications 9 et 10, caractérisé en ce qu'un hydrocarbure saturé, aliphatique ou cycloaliphatique, ramifié ou non, est ajouté pendant au moins l'une des deux étapes et/ou après la seconde étape.

12. Procédé de (co)polymérisation des alpha-oléfines, à une température comprise entre 20 et 350°C, en présence d'un système catalytique conforme à l'une des revendications 6 à 8.

13. Procédé selon la revendication 12, caractérisé en ce que la (co)polymérisation est effectuée à une température comprise entre 20 et 250°C, sous une pression allant jusqu'à 200 bars, en solution ou en suspension dans un hydrocarbure liquide inerte ayant au moins 6 atomes de carbone.

**14.** Procédé selon la revendication 12, appliqué à la (co)polymérisation de l'éthylène, mis en oeuvre de façon continue dans un réacteur dans lequel le temps de séjour moyen du catalyseur est compris entre 1 et 150 secondes, caractérisé en ce que la (co)polymérisation est effectuée à une température comprise entre 160 et 350°C, sous une pression comprise entre 400 et 3000 bars.

**Patentansprüche**

**1.** Katalysator für die Homopolymerisation und Copolymerisation von alpha-Olefinen, enthaltend eine mittels einer Organohalogenverbindung aktivierte Vanadiumverbindung, dadurch gekennzeichnet, dass dieser die allgemeine Formel:

$$VX_3, mAlX_3, nZ$$

besitzt, worin:

- X ein Halogenatom bedeutet;
- Z für zumindest einen gesättigten, verzweigten oder unverzweigten, zumindest teilweise halogenierten Kohlenwasserstoff steht;
- m zwischen 0,1 und 10 inbegriffen ist; und
- n zwischen 1 und 300 inbegriffen ist.

**2.** Katalysator gemäss Patentanspruch 1, dadurch gekennzeichnet, dass X Chlor bedeutet.

**3.** Katalysator gemäss einem der Patentansprüche 1 und 2, dadurch gekennzeichnet, dass m zwischen 0,2 und 3 inbegriffen ist.

**4.** Katalysator gemäss einem der Patentansprüche 1 bis 3, dadurch gekennzeichnet, dass n zwischen 2 und 100, vorzugsweise zwischen 4 und 50, inbegriffen ist.

**5.** Katalysator gemäss einem der Patentansprüche 1 bis 4, dadurch gekennzeichnet, dass dieser überdies mit zumindest einen gesättigten, aliphatischen oder cycloaliphatischen, verzweigten oder unverzweigten, unter normalen Temperatur- und Druckbedingungen vorzugsweise flüssigen Kohlenwasserstoff mit zumindest 6 Kohlenstoffatomen verbunden ist.

**6.** Katalytisches System für die Homopolymerisation und Copolymerisation von alpha-Olefinen, enthaltend zumindest eine Übergangsmetallverbindung und zumindest einen metallorganischen Aktivator, dadurch gekennzeichnet, dass die Übergangsmetallverbindung ein Katalysator gemäss einem der Patentansprüche 1 bis 5 ist.

**7.** Katalytisches System gemäss Patentanspruch 6, dadurch gekennzeichnet, dass der metallorganische Aktivator ein Trialkylaluminium der Formel $R_3Al$ ist, worin R für einen substituierten oder unsubstituierten Alkylrest mit 1 bis 10 Kohlenstoffatomen steht.

**8.** Katalytisches System gemäss einem der Patentansprüche 6 und 7, dadurch gekennzeichnet, dass das molare Verhältnis des Metalls des metallorganischen Aktivators zum Vanadium zwischen 1 und 100, vorzugsweise zwischen 2 und 50, beträgt.

**9.** Verfahren zur Herstellung eines Katalysators gemäss einem der Patentansprüche 1 bis 5, dadurch gekennzeichnet, dass es eine erste Stufe des gemeinsamen Vermahlens eines Vanadiumhalogenids, ausgewählt aus den Verbindungen der Formeln $VX_2$ und $VX_3$, worin X ein Halogenatom bedeutet, und ihren Gemischen, mit einem Aluminiumhalogenid $AlX_3$ und eine zweite Stufe, bestehend aus der Zugabe zumindest eines halogenierten Kohlenwasserstoffes Z, wie er im Patentanspruch 1 definiert wird, zu dem in der ersten Stufe erhaltenen Gemisch, umfasst, wobei das molare Verhältnis des Aluminiumhalogenids zur Vanadiumverbindung zwischen 0,1 und 10 beträgt und das molare Verhältnis des oder der halogenierten Kohlenwasserstoffe Z zur Vanadiumverbindung zwischen 1 und 300 beträgt.

**10.** Verfahren gemäss Patentanspruch 9, dadurch gekennzeichnet, dass es bei einer Temperatur zwischen 0 und 80°C durchgeführt wird.

**11.** Verfahren gemäss einem der Patentansprüche 9 und 10, dadurch gekennzeichnet, dass ein gesättigter, aliphatischer oder cycloaliphatischer, verzweigter oder unverzweigter Kohlenwasserstoff während zumindest einer der zwei Stufen und/oder nach der zweiten Stufe zugesetzt wird.

**12.** Verfahren zur (Co)polymerisation von alpha-Olefinen bei einer Temperatur zwischen 20 und 350°C in Anwesenheit eines katalytischen Systems gemäss einem der Patentansprüche 6 bis 8.

**13.** Verfahren gemäss Patentanspruch 12, dadurch gekennzeichnet, dass die (Co)polymerisation bei einer Temperatur zwischen 20 und 250°C unter einem bis zu 200 bar gehenden Druck in Lösung oder Suspension in einem inerten flüssigen Kohlenwasserstoff mit zumindest 6 Kohlenstoffatomen durchgeführt wird.

**14.** Verfahren gemäss Patentanspruch 12, angewendet bei der (Co)polymerisation von Ethylen in einem kontinuierlichen Verfahren in einem Reaktionsgefäss, worin die mittlere Verweilzeit des Katalysators zwischen 1 und 150 Sekunden beträgt, dadurch gekennzeichnet, dass die (Co)polymerisation bei einer Temperatur zwischen 160 und 350°C unter einem Druck zwischen 400 und 3000 bar durchgeführt wird.

## Claims

**1.** Catalyst for the homopolymerisation and copolymerisation of alpha-olefins, comprising a vanadium compound activated by means of an organohalogen compound, characterised in that it has the general formula:

$$VX_3, mAlX_3, nZ$$

in which:

- X is a halogen atom;
- Z is at least one at least partially halogenated, branched or unbranched, saturated hydrocarbon,
- m is between 0.1 and 10, and
- n is between 1 and 300.

**2.** Catalyst according to Claim 1, characterised in that X is chlorine.

**3.** Catalyst according to either of Claims 1 and 2, characterised in that m is between 0.2 and 3.

**4.** Catalyst according to one of Claims 1 to 3, characterised in that n is between 2 and 100, advantageously between 4 and 50.

**5.** Catalyst according to one of Claims 1 to 4, characterised in that it is additionally used in combination with at least one branched or unbranched, aliphatic or cycloaliphatic, saturated hydrocarbon which is preferably liquid in normal temperature and pressure conditions and contains at least 6 carbon atoms.

**6.** Catalyst system for the homopolymerisation and copolymerisation of alpha-olefins, comprising at least one transition metal compound and at least one organometallic activator, characterised in that the transition metal compound is a catalyst in accordance with one of Claims 1 to 5.

**7.** Catalyst system according to Claim 6, characterised in that the organometallic activator is a trialkylaluminium of formula $R_3Al$, in which R is a substituted or unsubstituted alkyl radical containing from 1 to 10 carbon atoms.

**8.** Catalyst system according to either of Claims 6 and 7, characterised in that the molar ratio of the metal of the organometallic activator to the vanadium is between 1 and 100, preferably between 2 and 50.

**9.** Process for the preparation of a catalyst in accordance with Claims 1 to 5, characterised in that it comprises a first stage of cogrinding of a vanadium halide chosen from the compounds of formulae $VX_2$ and $VX_3$ and mixtures thereof, in which formulae X is a halogen atom, with an aluminium halide $AlX_3$, and a second stage consisting in adding at least one halogenated hydrocarbon Z, as defined in Claim 1, to the mixture obtained during the first stage, the molar ratio of the aluminium halide to the vanadium compound being between 0.1 and 10, the molar ratio of the halogenated hydrocarbon(s) Z to the vanadium compound being between 1 and 300.

10. Process according to Claim 9, characterised in that it is performed at a temperature of between 0 and 80°C.

11. Process according to either of Claims 9 and 10, characterised in that a branched or unbranched, aliphatic or cycloaliphatic, saturated hydrocarbon is added during at least one of the two stages and/or after the second stage.

12. Process for (co)polymerisation of alpha-olefins at a temperature of between 20 and 350°C, in the presence of a catalyst system in accordance with one of Claims 6 to 8.

13. Process according to Claim 12, characterised in that the (co)polymerisation is performed at a temperature of between 20 and 250°C, at a pressure ranging up to 200 bars, in solution or in suspension in an inert liquid hydrocarbon containing at least 6 carbon atoms.

14. Process according to Claim 12, applied to the (co)polymerisation of ethylene, performed continuously in a reactor in which the average residence time of the catalyst is between 1 and 150 seconds, characterised in that the (co) polymerisation is performed at a temperature of between 160 and 350°C, at a pressure of between 400 and 3000 bars.